# FASCICULE DE BREVET EUROPEEN

(11) **EP 3 409 978 B1**
(45) Date de publication et mention de la délivrance du brevet: **25.03.2020**
(21) Numéro de dépôt: 18173508.5
(22) Date de dépôt: 22.05.2018
(51) Int. Cl.: F16H 59/02, F16H 61/24, F16H 63/38

(54) **SÉLECTEUR DE VITESSE À EFFORTS DIFFÉRENCES VARIABLES**
GESCHWINDIGKEITSWAHLSCHALTER MIT UNTERSCHIEDLICHEN VARIABLEN ANSTRENGUNGEN
GEAR SELECTOR WITH VARIABLE DIFFERENCE FORCES

(30) Priorité: 02.06.2017 FR 1754888
(43) Date de publication de la demande: 05.12.2018
(73) Titulaire: PSA Automobiles SA, 78300 Poissy (FR)
(72) Inventeur: FALCOZ, Marc, 78100 ST GERMAIN EN LAYE (FR); GERARD, Fabien, 91400 ORSAY (FR); DELAND HUY, Eric, 91100 CORBEIL ESSONNES (FR); SAUVAGE, Jean Marie, 78125 GAZERAN (FR)

(56) Documents cités:
- EP-A1- 2 112 408
- DE-A1-102005 053 610
- FR-A1- 3 040 457

## Description

### Domaine technique

La présente invention se rapporte à un sélecteur de vitesse à efforts différenciés variables ainsi qu'à un véhicule automobile comprenant un tel sélecteur.

### État de la technique

Il est connu de l'état de la technique l'utilisation d'un sélecteur de vitesse pour commander une boîte de vitesses d'un véhicule automobile. Pour cela, le sélecteur de vitesse comprend un levier de changement de vitesse relié à une ou plusieurs fourchettes de commandes de la boîte de vitesses, par l'intermédiaire d'un arbre de sélecteur de vitesse et d'une tringlerie. L'arbre de sélecteur de vitesse est monté mobile sur un support afin de permettre au conducteur d'enclencher une vitesse en déplaçant le levier de changement de vitesse. Le sélecteur de vitesse comprend également un dispositif de verrouillage permettant de maintenir, de manière élastique, le levier de changement de vitesse dans des positions prédéfinies de sorte à indiquer à l'utilisateur la vitesse sélectionnée, en lui fournissant une rétroaction lors de la manipulation du levier.

Les sélecteurs de vitesse sont également utilisés dans les véhicules automobiles hybrides comprenant un moteur thermique et un moteur auxiliaire. La demande de brevet FR 3 040 457 décrit un exemple de sélecteur de vitesse permettant avantageusement d'offrir des positions prédéfinies supplémentaires lorsque le moteur auxiliaire prend la relève du moteur thermique. Pour cela, le sélecteur de vitesse comprend un organe de verrouillage débrayable de l'arbre moteur, permettant d'établir ou non une interaction avec l'arbre moteur. De cette manière, lorsque le moteur auxiliaire est utilisé, des positions de verrouillage additionnelles sont fournies par la coopération entre l'organe de verrouillage et l'arbre moteur. À l'inverse, lorsque le moteur thermique est utilisé, lesdites positions de verrouillage additionnelles sont désactivées par le débrayage du dispositif de verrouillage. Ainsi, le sélecteur de vitesse débrayable permet d'ajouter des positions prédéfinies de manière dynamique et aisément commandables lorsque le moteur auxiliaire est utilisé. Le conducteur peut alors contrôler la vitesse du véhicule dans ces deux modes de fonctionnement à partir d'un même sélecteur de vitesse.

Toutefois, l'utilisation du moteur auxiliaire peut être non recommandée ou inadaptée dans certaines conditions. C'est par exemple le cas lorsque la quantité d'énergie disponible pour faire fonctionner le moteur auxiliaire est insuffisante ou bien que la vitesse du véhicule est inadaptée.

La présente invention vise à résoudre cette problématique en proposant un sélecteur de vitesse à effort différencié pour un véhicule automobile, permettant d'avertir un utilisateur sur la pertinence ou non de sélectionner une vitesse.

### Description de l'invention

À cette fin, l'invention a pour objet un sélecteur de vitesse à efforts différenciés variables destiné à être intégré dans un véhicule automobile, comprenant un arbre sélecteur de vitesse monté sur un support de sorte à permettre à une première extrémité de l'arbre de pivoter autour d'un premier axe de rotation, et un organe de résistance au pivotement de l'arbre autour du premier axe de rotation, comprenant une base montée sur le support de manière à ce qu'une première extrémité de la base pivote autour d'un deuxième axe de rotation, la base comprenant un organe de frottement saillant au niveau de sa première extrémité et un moyen élastique logé dans la base de manière à appliquer une force de rappel sur l'organe de frottement selon une direction normale au deuxième axe de rotation.

Le sélecteur de vitesse selon l'invention est remarquable en ce qu'il comprend des moyens motorisés configurés pour pivoter la base de l'organe de résistance autour du deuxième axe de rotation, entre au moins deux positions embrayées distinctes, où l'organe de frottement est en contact de la première extrémité de l'arbre sélecteur de vitesse de manière à opposer une force de résistance différente au pivotement de l'arbre autour du premier axe de rotation.

Autrement dit, les moyens motorisés sont aptes à incliner la base de l'organe de résistance dans au moins deux positions embrayées distinctes par rapport à l'arbre sélecteur de vitesse. Par les termes « position embrayée », on entend une position de la base dans laquelle le moyen élastique est en contact avec l'arbre sélecteur de vitesse. Dans chaque position embrayée, le moyen élastique exerce une force de résistance au pivotement de l'arbre. Il est à souligner que selon l'invention le moyen élastique et l'arbre sélecteur de vitesse sont configurés pour exercer une force de valeur différente, à l'encontre du pivotement de l'arbre sélecteur de vitesse, lorsque la base passe d'une position embrayée à une autre. Ainsi, de façon avantageuse, les moyens motorisés peuvent faire varier, sur commande, l'effort qu'un utilisateur doit exercer sur l'arbre pour le faire pivoter d'un même angle. De ce fait, les moyens motorisés permettent d'alerter l'utilisateur sur la pertinence ou non de sélectionner une autre vitesse en déplaçant la base. Pour cela, les moyens motorisés pivotent la base dans une autre position embrayée où l'organe de résistance oppose une résistance différente au pivotement de l'arbre.

Dans un mode particulier de réalisation, la base comporte un fond mobile sur lequel prend appui le moyen élastique, le fond mobile se déplaçant parallèlement à la force de rappel appliquée par le moyen élastique sur l'organe de frottement. Autrement dit, le fond mobile est adapté pour modifier la valeur de la précharge appliquée sur le moyen élastique. De ce fait, en fonction de la position du fond mobile, la valeur de la force exercée sur l'arbre par l'organe de frottement varie. L'invention permet ainsi de contrôler simplement la force de résistance opposée par l'organe de résistance au pivotement de l'arbre.

Selon une variante de réalisation, le fond mobile comprend un appendice dépassant de la base. L'appendice permet de contrôler facilement et précisément la position du fond mobile depuis l'extérieur de la base et donc indirectement la valeur de la force de résistance opposée au pivotement de l'arbre par l'organe de résistance.

Selon une variante de réalisation, le support comprend une rampe sur laquelle prend appui l'appendice lorsque l'organe de résistance pivote entre deux positions embrayées distinctes. La présence de la rampe permet de modifier simplement la position du fond mobile dans la base sans qu'il soit pour cela nécessaire de recourir à des dispositifs électroniques susceptibles de tomber en panne. Selon un autre avantage, une rampe présente un encombrement nettement moindre sur le support qu'un actionneur électrique. L'utilisation d'une rampe est également plus économe par rapport à un actionneur électrique.

Selon une variante de réalisation, l'appendice comprend une roue montée sur un troisième axe de rotation qui est parallèle au deuxième axe de rotation, la roue étant positionnée pour prendre appui sur la rampe. La roue permet avantageusement de limiter les forces de frottement lors du déplacement de l'appendice par la rampe, afin de réduire les efforts exercés par les moyens motorisés pour pivoter la base entre deux positions embrayées distinctes.

Selon une variante de réalisation préférée, l'appendice dépasse de la base au niveau d'une seconde extrémité opposée à la première extrémité. Ce mode de réalisation favorise un déplacement uniforme du fond mobile dans la base.

Selon une variante de réalisation, la rampe est formée par une cale amovible de manière à permettre sa substitution par une autre cale formant une rampe d'inclinaison différente. Ainsi, de façon avantageuse, on peut aisément modifier ou adapter la valeur de la force de résistance au pivotement de l'arbre en fonction du type de boîte de vitesse et/ou de véhicule automobile que l'on souhaite équiper avec l'invention.

Selon une variante de réalisation, le fond mobile comporte un passage pour permettre le passage d'un axe ainsi que le déplacement du fond mobile autour de l'axe.

Selon une variante de réalisation, l'organe de frottement comprend une bille et le moyen élastique comprend un ressort de rappel.

Selon une variante de réalisation, la première extrémité de l'arbre sélecteur de vitesse comprend une surface d'interaction avec l'organe de frottement comportant des premiers crans alignés selon le mouvement de rotation de l'arbre et configurés pour accueillir une partie l'organe de frottement tout en permettant le passage de l'organe de frottement d'un cran à l'autre. Autrement dit, la surface d'interaction comporte des premiers crans permettant d'indiquer à un utilisateur une vitesse sélectionnée, en lui fournissant une rétroaction lors du pivotement de l'arbre sélecteur de vitesse autour du premier axe de rotation. De façon préférée, à chaque cran est associée une vitesse d'une boîte de vitesses et/ou une fonction d'un véhicule automobile.

Dans un autre mode de réalisation, les moyens motorisés sont configurés pour faire pivoter la base de l'organe de résistance dans une position de débrayage, dans laquelle les moyens élastiques ne sont pas en contact avec l'arbre sélecteur de vitesse.

Dans un autre mode de réalisation, les moyens motorisés sont commandés par une unité centrale configurée pour pivoter la base de l'organe de résistance en fonction de données relative à un véhicule automobile.

Dans le même but que celui indiqué plus haut, la présente invention propose également un véhicule automobile comprenant un dispositif de sélecteur de vitesse à efforts différenciés variables tel que décrit ci-dessus. De préférence, le véhicule automobile est de type hybride.

### Description des figures

D'autres aspects et avantages de l'invention apparaîtront à la lecture de la description qui suit de modes particuliers de réalisation, donnés à titre d'exemples non limitatifs et en référence aux dessins qui l'accompagnent, dans lesquels :
- la figure 1 est une représentation en perspective d'un mode de réalisation d'un sélecteur de vitesse à efforts différenciés variables selon l'invention ;
- la figure 2 est une coupe partielle du sélecteur de vitesse illustré à la figure 1, où l'organe de résistance est débrayé de l'arbre sélecteur de vitesse ;
- la figure 3 est une coupe partielle du sélecteur de vitesse illustré à la figure 1, où l'organe de résistance est embrayé contre l'arbre sélecteur de vitesse selon une première position ;
- la figure 4 est une coupe partielle du sélecteur de vitesse illustré à la figure 1, où l'organe de résistance est embrayé contre l'arbre sélecteur de vitesse selon une deuxième position.

### Description détaillée de plusieurs modes de réalisation de l'invention

Pour rappel, la présente invention propose un sélecteur de vitesse à effort différencié pour un véhicule automobile, permettant d'avertir un utilisateur sur la pertinence ou non de sélectionner une vitesse.

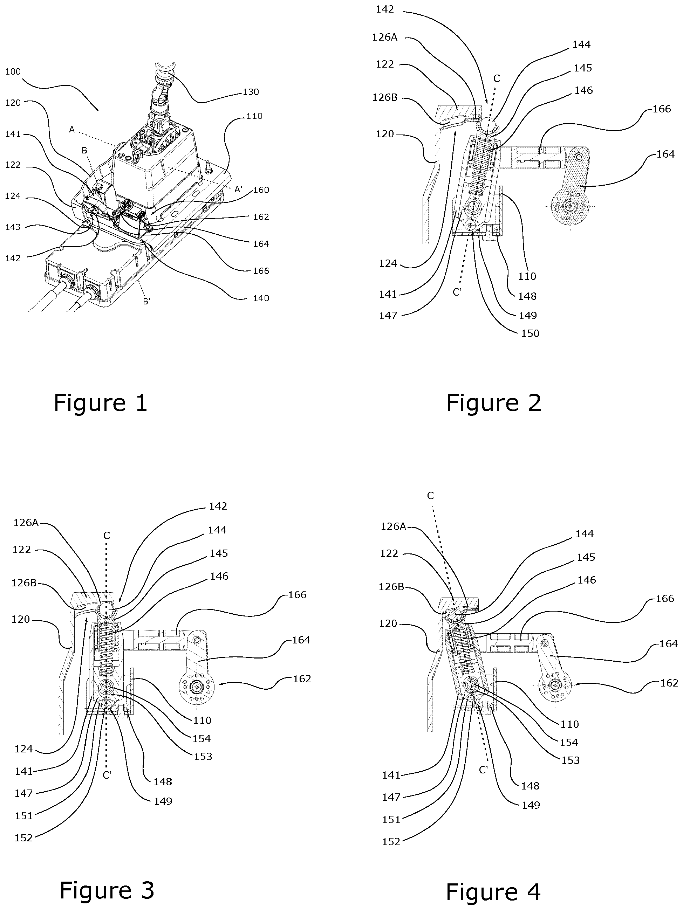

Un mode de réalisation non limitatif d'un sélecteur de vitesse 100 selon l'invention est illustré par les figures 1 à 4. Sur les différentes figures, les mêmes références désignent des éléments identiques ou similaires. Sur la figure 1, le sélecteur de vitesse 100 comprend un support 110 ainsi qu'un arbre 120 sélecteur de vitesse. L'arbre 120 est relié à un levier 130 de changement de vitesse de manière à permettre à un utilisateur d'actionner ledit arbre par l'intermédiaire du levier 130. L'arbre 120 est monté sur le support 110 de sorte à pivoter par rapport au support autour d'un premier axe de rotation (AA') sur une commande du levier 130.

L'arbre 120 sélecteur de vitesse est relié à une tringlerie non représentée, commandant une ou plusieurs fourchettes de commandes de la boîte de vitesse en fonction de la position de l'arbre. L'utilisateur peut de la sorte sélectionner un rapport de boîte de vitesses en déplaçant le levier 130.

Le sélecteur de vitesse 100 comporte par ailleurs un organe de résistance 140 configuré pour s'opposer au pivotement de l'arbre 120 autour du premier axe de rotation (AA'). Pour cela, l'organe de résistance 140 comprend une base 141 montée sur le support 110 de sorte qu'une première extrémité 142 de la base pivote autour d'un deuxième axe de rotation (BB'). L'organe de résistance 140 comporte également des moyens élastiques 143 saillants au niveau de sa première extrémité 142. Les moyens élastiques sont configurés pour se déplacer ou se déformer, de façon réversible, selon une direction normale au deuxième axe de rotation (BB').

Comme illustré à la figure 2, les moyens élastiques 143 comportent une bille 144 maintenue en partie dans la base 141 par l'intermédiaire d'une gaine 145 et un ressort de rappel 146. Le ressort de rappel 146 est logé dans la base de sorte à prendre appui sur la gaine 145 et d'autre part sur un fond mobile 147 logé dans la base 141. La déformation du ressort de rappel 146 le long de son axe (CC') permet d'assurer une extension partielle de la bille 144 hors de la base, par une ouverture supérieure ménagée à cet effet, de sorte à être saillante au niveau de la première extrémité 142 de la base 141.

Une première extrémité 122 de l'arbre 120 comporte une surface d'interaction 124 configurée pour interagir avec la bille 144. La surface d'interaction est sensiblement convexe et comporte des concavités ou des crans 126 alignés selon le mouvement de rotation de l'arbre autour du premier axe de rotation (AA'). La surface d'interaction 124 comporte une première série de crans 126A et une seconde série de crans 126B. Pour chaque série de crans, plusieurs crans sont alignés dans un même plan radial ou sensiblement radial au premier axe de rotation (AA'). Comme illustré aux figures 3 et 4, chaque cran 126 est configuré pour accueillir au moins une partie de la bille 144 tout en permettant le passage de ladite bille d'un cran à l'autre lorsque l'utilisateur pivote l'arbre 120 autour du premier axe de rotation (AA'). Chaque cran 126 permet ainsi de marquer une position de l'arbre 120, correspondant à une vitesse ou un état d'un véhicule automobile muni du sélecteur de vitesse 100 ici décrit.

Le sélecteur de vitesse 100 comprend des moyens motorisés 160 représentés sur la figure 1. Les moyens motorisés sont configurés pour pivoter la base 141 autour du deuxième axe de rotation (BB'). Pour cela, les moyens motorisés comprennent un servomoteur 162 piloté par un dispositif de commande non représenté sur les figures. Le servomoteur est apte à pivoter la première extrémité 142 de la base autour du deuxième axe (BB') de rotation par l'intermédiaire d'un bras servomoteur 164 coopérant avec une biellette 166. Ainsi, le servomoteur 162 est programmé pour incliner la base 141 dans des positions différentes, notamment dans une position dite « débrayée » illustrée à la figure 2. Dans cette position débrayée, la bille 144 n'est pas en contact avec la surface d'interaction 124 de sorte que l'organe de résistance 140 n'oppose aucune résistance au pivotement de l'arbre 120.

Selon l'invention, le servomoteur 162 est programmé pour incliner la base dans au moins deux positions dites « embrayées » telles qu'illustrées aux figures 3 et 4. À chaque position embrayée, il est associé un angle d'inclinaison spécifique de la base 141 par rapport à l'arbre 120. Pour chaque position embrayée, la bille 144 est en contact avec la surface d'interaction 124 de sorte que l'organe de résistance 140 oppose une résistance au pivotement de l'arbre 120.

Selon l'invention, le sélecteur de vitesse 100 comprend également une cale 148 montée de façon amovible sur le support 110. La cale 148 est configurée et agencé de sorte à former une rampe 149 à proximité d'une seconde extrémité 150 de la base 141 opposée à sa première extrémité 142. Comme illustré aux figures 3 et 4, la seconde extrémité 150 comporte une ouverture de manière à permettre le dépassement d'un appendice 151 du fond mobile 147. L'appendice 151 sert de support pour une roue 152 montée libre en rotation autour d'un axe parallèle au deuxième axe de rotation (BB'). Le fond mobile comporte également un passage 153 de forme ovale de manière à permettre le passage d'un axe 154 autour duquel pivote la base 141. La forme ovale du passage 153 permet avantageusement le déplacement du fond mobile 147 dans la base 141 le long de l'axe (CC') du ressort de rappel 146.

Ainsi, comme illustré à la figure 3, lorsque le servomoteur 162 bascule la base 141 dans une première position embrayée, la roue 152 prend appui sur la rampe 149 de manière à déplacer le fond mobile 147 en direction de la première extrémité 142 de la base. De ce fait, le fond mobile 147 comprime le ressort de rappel 146 pour que l'organe de résistance 140 applique une première valeur de résistance au niveau de la première série de crans 126A.

Lorsque le servomoteur 162 entraine le basculement de la base 141 dans une seconde position embrayée illustrée à la figure 4, la rampe 149 déplace de nouveau la roue en direction de la première extrémité 142 de la base. De ce fait, le fond mobile 147 comprime encore plus le ressort 145 pour que l'organe de résistance 140 applique une deuxième valeur de résistance au niveau de la seconde série de crans 126B.

Ainsi, la force exercée par la bille 144 contre la première série de crans 126A est inférieure à la force exercée contre la seconde série de crans 126B. Autrement dit, la valeur de la force exercée par la bille 144 contre le pivotement de l'arbre 120 est sensiblement proportionnelle à la valeur de l'angle formé entre le premier axe de rotation (AA') et l'axe (CC') du ressort. L'invention permet ainsi de faire varier l'effort exercé par la bille 144 sur l'arbre 120, par une simple inclinaison de la base 141 par l'intermédiaire des moyens motorisés 150 et de la cale 148 coopérant avec l'appendice 151 du fond mobile 147.

Comme mentionné ci-dessus, un sélecteur de vitesse 100 peut être monté sur un véhicule automobile hybride comprenant au moins une roue motrice ainsi qu'un moteur thermique et au moins un moteur auxiliaire aptes à entrainer ladite roue motrice. Dans ce mode de réalisation du véhicule automobile, les moyens motorisés 160 pour embrayer ou débrayer l'organe de résistance 140 contre l'arbre 120 de sélecteur de vitesse peuvent être commandés sur une sélection de l'un parmi le moteur thermique et ledit au moins un moteur auxiliaire pour entrainer ladite roue motrice. Ainsi, les moyens de débrayage peuvent être commandés sur une sélection du moteur thermique pour entrainer ladite roue motrice. De cette manière, lorsque le moteur auxiliaire est sélectionné pour entrainer la roue motrice, des positions de verrouillage additionnelles et à efforts différenciés sont fournies par la coopération élastique de la bille 144 de l'organe de résistance 140 et la surface d'interaction 124 de l'arbre 120. Par exemple, lorsque le niveau d'énergie stocké par le véhicule automobile est suffisant pour permettre un fonctionnement normal du moteur auxiliaire, les moyens motorisés embrayent l'organe de résistance dans une première position illustrée à la figure 3. L'utilisateur percevra de ce fait une légère résistance au niveau de l'arbre lors de la sélection du moteur auxiliaire. Dans le cas où le niveau d'énergie stocké est insuffisant pour permettre le bon fonctionnement du moteur auxiliaire, les moyens motorisés embrayent l'organe de résistance dans une deuxième position illustrée à la figure 4. L'utilisateur percevra alors une résistance plus marquée lors du pivotement de l'arbre 120 pour sélectionner le moteur auxiliaire ou une autre vitesse dudit moteur. À l'inverse, lorsque le moteur thermique est sélectionné pour entrainer la roue motrice, lesdites positions de verrouillage additionnelles sont désactivées par le débrayage de l'organe de résistance 140 comme illustré à la figure 2.

## Revendications

1. Sélecteur de vitesse (100) à efforts différenciés variables destiné à être intégré dans un véhicule automobile, comprenant :
- un arbre (120) sélecteur de vitesse monté sur un support (110) de sorte à permettre à une première extrémité (122) de l'arbre (120) de pivoter autour d'un premier axe de rotation (AA') ; et
- un organe de résistance (140) au pivotement de l'arbre (120) autour du premier axe de rotation (AA'), comprenant une base (141) montée sur le support (110) de manière à ce qu'une première extrémité (142) de la base (141) pivote autour d'un deuxième axe de rotation (BB'), la base (141) comprenant un organe de frottement (144) saillant au niveau de sa première extrémité (142) et un moyen élastique (146) logé dans la base (141) de manière à appliquer une force de rappel sur l'organe de frottement (144) selon une direction normale au deuxième axe de rotation (BB') ;
**caractérisé en ce que** le sélecteur de vitesse (100) comprend des moyens motorisés (160) configurés pour pivoter la base (141) autour du deuxième axe de rotation (BB'), entre au moins deux positions embrayées distinctes, où l'organe de frottement (144) est en contact de la première extrémité (122) de l'arbre (120) sélecteur de vitesse (100) de manière à opposer une force de résistance différente au pivotement de l'arbre (120) autour du premier axe de rotation (AA').

2. Sélecteur de vitesse (100) selon la revendication précédente, **caractérisé en ce que** la base (141) comporte un fond mobile (147) sur lequel prend appui le moyen élastique (146), le fond mobile se déplaçant parallèlement à la force de rappel appliquée par le moyen élastique (146) sur l'organe de frottement (144).

3. Sélecteur de vitesse (100) selon la revendication précédente, **caractérisé en ce que** le fond mobile (147) comprend un appendice (151) dépassant de la base (141).

4. Sélecteur de vitesse (100) selon la revendication précédente, **caractérisé en ce que** le support (110) comprend une rampe (149) sur laquelle prend appui l'appendice (151) lorsque l'organe de résistance pivote entre deux positions embrayées distinctes.

5. Sélecteur de vitesse (100) selon la revendication 3 ou 4, **caractérisé en ce que** l'appendice (151) comprend une roue (152) montée sur un troisième axe de rotation qui est parallèle au deuxième axe de rotation (BB'), la roue étant positionnée pour prendre appui sur la rampe (149).

6. Sélecteur de vitesse (100) selon l'une des revendications 3 à 5, **caractérisé en ce que** l'appendice (151) dépasse de la base (141) au niveau d'une seconde extrémité (150) opposée à la première extrémité (142).

7. Sélecteur de vitesse (100) selon la revendication précédente, **caractérisé en ce que** la rampe (149) est formée par une cale (148) amovible de manière à permettre sa substitution par une autre cale formant une rampe d'inclinaison différente.

8. Sélecteur de vitesse (100) selon la revendication précédente, **caractérisé en ce que** le fond mobile (147) comporte un passage (163) pour permettre le passage d'un axe (154) ainsi que le déplacement du fond mobile autour de l'axe (154).

9. Sélecteur de vitesse (100) selon l'une des revendications précédentes, **caractérisé en ce que** l'organe de frottement (144) comprend une bille et le moyen élastique (146) comprend un ressort de rappel (146).

10. Véhicule automobile comprenant un sélecteur de vitesse (100) à résistance variable selon l'une des revendications précédentes.

## Patentansprüche

1. Geschwindigkeitswahlschalter (100) mit unterschiedlichen variablen Kräften, der dazu bestimmt ist, in ein Kraftfahrzeug integriert zu sein, der Folgendes umfasst:
- eine Geschwindigkeitsauswahlwelle (120), die auf einen Träger (110) derart montiert ist, dass es einem ersten Ende (122) der Welle (120) erlaubt ist, um eine erste Rotationsachse (AA') zu schwenken, und
- ein Widerstandsorgan (140) gegen das Schwenken der Welle (120) um die erste Rotationsachse (AA'), das eine Basis (141) umfasst, die auf den Träger (110) derart montiert ist, dass ein erstes Ende (142) der Basis (141) um eine zweite Rotationsachse (BB') schwenkt, wobei die Basis (141) ein Reibungsorgan (144) umfasst, das im Bereich seines ersten Endes (142) vorragt, und ein elastisches Mittel (146), das in der Basis (141) derart aufgenommen ist, dass eine Rückstellkraft auf das Reibungsorgan (144) entlang einer Richtung senkrecht zu der zweiten Rotationsachse (BB') angelegt wird;
**dadurch gekennzeichnet, dass** der Geschwindigkeitswahlschalter (100) motorisierte Mittel (160) umfasst, die konfiguriert sind, um die Basis (141) um die zweite Rotationsachse (BB') zwischen mindestens zwei getrennten eingerückten Positionen zu schwenken, wobei das Reibungsorgan (144) mit dem ersten Ende (122) der Welle (120) des Geschwindigkeitswahlschalters (100) derart in Kontakt ist, dass dem Schwenken der Welle (120) um die erste Rotationsachse (AA') eine unterschiedliche Widerstandskraft entgegengesetzt wird.

2. Geschwindigkeitswahlschalter (100) nach dem vorstehenden Anspruch, **dadurch gekennzeichnet, dass** die Basis (141) einen beweglichen Grund (147) umfasst, auf dem das elastische Mittel (146) aufliegt, wobei sich der bewegliche Grund parallel zu der Rückstellkraft, die von dem elastischen Mittel (146) auf dem Reibungsorgan (144) ausgeübt wird, verlagert.

3. Geschwindigkeitswahlschalter (100) nach dem vorstehenden Anspruch, **dadurch gekennzeichnet, dass** der bewegliche Grund (147) einen Ansatz (151) umfasst, der von der Basis (141) vorragt.

4. Geschwindigkeitswahlschalter (100) nach dem vorstehenden Anspruch, **dadurch gekennzeichnet, dass** der Träger (110) eine Rampe (149) umfasst, auf der der Ansatz (151) aufliegt, wenn das Widerstandsorgan zwischen zwei getrennten eingerückten Positionen schwenkt.

5. Geschwindigkeitswahlschalter (100) nach Anspruch 3 oder 4, **dadurch gekennzeichnet, dass** der Ansatz (151) ein Rad (152) umfasst, das auf eine dritte Rotationsachse montiert ist, die zu der zweiten Rotationsachse (BB') parallel ist, wobei das Rad positioniert ist, um auf der Rampe (149) aufzuliegen.

6. Geschwindigkeitswahlschalter (100) nach einem der Ansprüche 3 bis 5, **dadurch gekennzeichnet, dass** der Ansatz (151) von der Basis (141) auf der Ebene eines zweiten Endes (150), das dem ersten Ende (142) entgegengesetzt ist, vorragt.

7. Geschwindigkeitswahlschalter (100) nach dem vorstehenden Anspruch, **dadurch gekennzeichnet, dass** die Rampe (149) von einem abnehmbaren Keil (148) derart gebildet ist, dass sein Ersetzen durch einen anderen Keil, der eine Rampe mit unterschiedlicher Neigung bildet, erlaubt wird.

8. Geschwindigkeitswahlschalter (100) nach dem vorstehenden Anspruch, **dadurch gekennzeichnet, dass** der bewegliche Grund (147) eine Passage (163) umfasst, um die Passage einer Achse (154) sowie die Verlagerung des beweglichen Grunds um die Achse (154) zu erlauben.

9. Geschwindigkeitswahlschalter (100) nach einem der vorstehenden Ansprüche, **dadurch gekennzeichnet, dass** das Reibungsorgan (144) eine Kugel umfasst, und dass das elastische Mittel (146) eine Rückstellfeder (146) umfasst.

10. Kraftfahrzeug, das einen Geschwindigkeitswahlschalter (100) mit variablem Widerstand nach einem der vorstehenden Ansprüche umfasst.

## Claims

1. A gear selector (100) with variable differentiated forces intended to be integrated in a motor vehicle, including:
- a gear selector shaft (120) mounted on a support (110) so as to permit a first end (122) of the shaft (120) to pivot about a first axis of rotation (AA'); and
- a resistance member (140) to the pivoting of the shaft (120) about the first axis of rotation (AA'), including a base (141) mounted on the support (110) so that a first end (142) of the base (141) pivots about a second axis of rotation (BB'), the base (141) including a friction member (144) projecting at the level of its first end (142) and an elastic means (146) housed in the base (141) so as to apply a return force on the friction member (144) along a direction normal to the second axis of rotation (BB');
**characterized in that** the gear selector (100) includes motorized means (160) configured to pivot the base (141) about the second axis of rotation (BB'), between at least two distinct engaged positions, where the friction member (144) is in contact with the first end (122) of the shaft (120) of the gear selector (100) so as to oppose a different resistance force to the pivoting of the shaft (120) about the first axis of rotation (AA').

2. The gear selector (100) according to the preceding claim, **characterized in that** the base (141) comprises a mobile bottom (147) on which the elastic means (146) rests, the mobile bottom moving parallel to the return force applied by the elastic means (146) on the friction member (144).

3. The gear selector (100) according to the preceding claim, **characterized in that** the mobile bottom (147) includes an appendage (151) protruding from the base (141) .

4. The gear selector (100) according to the preceding claim, **characterized in that** the support (110) includes a ramp (149) on which the appendage (151) rests when the resistance member pivots between two distinct engaged positions.

5. The gear selector (100) according to Claim 3 or 4, **characterized in that** the appendage (151) includes a wheel (152) mounted on a third axis of rotation which is parallel to the second axis of rotation (BB'), the wheel being positioned to rest on the ramp (149).

6. The gear selector (100) according to one of Claims 3 to 5, **characterized in that** the appendage (151) protrudes from the base (141) at the level of a second end (150) opposite the first end (142).

7. The gear selector (100) according to the preceding claim, **characterized in that** the ramp (149) is formed by a removable wedge (148) so as to permit its substitution by another wedge forming a ramp having a different inclination.

8. The gear selector (100) according to the preceding claim, **characterized in that** the mobile bottom (147) comprises a passage (163) to permit the passing of an axis (154) and also the displacement of the mobile bottom around the axis (154).

9. The gear selector (100) according to one of the preceding claims, **characterized in that** the friction member (144) includes a ball and the elastic means (146) includes a return spring (146).

10. A motor vehicle including a gear selector (100) with variable resistance according to one of the preceding claims.
